# EUROPÄISCHE PATENTANMELDUNG

(11) **EP 0 713 843 A1**
(43) Veröffentlichungstag der Anmeldung: **29.05.1996**
(21) Anmeldenummer: 95117220.4
(22) Anmeldetag: 02.11.1995
(51) Int. Cl.: C02F 1/78

(54) **Verfahren und Vorrichtung zur Behandlung von Abwasser mit Ozon**

(30) Priorität: 17.11.1994 DE 4440969
(71) Anmelder: MESSER GRIESHEIM GmbH, D-60547 Frankfurt (DE)
(72) Erfinder: Baldes, Hans-Ulrich, D-14193 Berlin (DE); Marzinkowski, Joachim M., Prof. Dr., D-40221 Düsseldorf (DE)

(57) **Zusammenfassung**

Mit dem erfindungsgemäßen Verfahren werden vorzugsweise tensidhaltige Abwässer, die mit Partikeln belastet sind, mit Ozon über einem Festbett behandelt. Der oxidative Abbau verläuft dabei vollständiger als bei konventionellen Verfahren, außerdem findet eine gleichzeitige Entschäumung statt.

## Beschreibung

Die Erfindung betrifft ein Verfahren und eine Vorrichtung zur Behandlung von Abwasser mit Ozon sowie eine für die Durchführung des Verfahrens geeignete Vorrichtung.

Nach dem Stand der Technik ist es gebräuchlich, Wasser mit Ozon aufzubereiten.
So wird in der EP-OS 0 577 475 A1 ein Verfahren beschrieben, bei dem Trinkwasser in einer Blasenkolonne mit Ozon behandelt wird. Die DE-PS 28 27 151 C2 zeigt ein Verfahren bei dem Abwasser mit belastenden Inhaltsstoffen in einer Vorrichtung in einem Teilstrom mit Ozon angereichert wird, der dem zu behandelden Abwasser wieder zugeführt wird. Das Verfahren der EP-OS 0 577 475 A1 hat den Nachteil, daß im Batchbetrieb gearbeitet wird. Dieser Nachteil ist bei dem Verfahren der DE-PS 28 27 151 C2 nicht gegeben. Generell verbleibt jedoch das Problem, daß stark verschmutzte Abwässer, die Partikel enthalten, auch durch das sehr reaktionsfähige Ozon häufig nicht vollständig aufgearbeitet werden können, da die Partikel eine starke Tendenz haben zu sedimentieren. Das gilt auch dann, wenn diese Partikel durch Tenside in der Dispersion stabilisiert sind.

Der Erfindung liegt daher die Aufgabe zugrunde, ein Verfahren und eine Vorrichtung zu schaffen, mit denen auch sehr stark verschmutzte, insbesondere partikelhaltige Abwässer gereinigt werden können.

Die Aufgabe wird erfindungsgemäß gelöst durch die im Anspruch 1 angegebenen Merkmale.

Mit dem erfindungsgemäßen Verfahren ist es nunmehr möglich, Abwässer mit Ozon vollständiger zu reinigen. Überraschenderweise findet im Falle der erfindungsgemäßen Behandlung eines mit Tensiden belasteten Abwassers auch eine sehr wirksame Entschäumung statt.

Vorteilhafte Weiterbildungen sind in den Unteransprüchen angegeben.

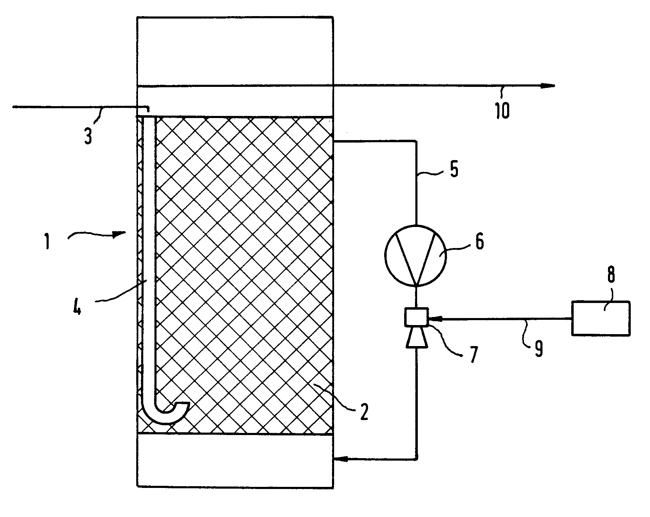

Die Zeichnung veranschaulicht eine Vorrichtung zur Durchführung des erfindungsgemäßen Verfahrens in schematischer Form.

Die Zeichnung zeigt eine Vorrichtung, in der sich das Abwasser in einem Reaktor 1 befindet, der mit einem Festbett 2 ausgestattet ist und der durch einen Zulauf, 3 der in ein Tauchrohr 4 mündet, durch das zu behandelnde Abwasser gespeist wird. An dem Reaktor 1 ist ein Beipass 5 angebracht, an dem sich eine Pumpe 6 und ein Wasserstrahl-Gasverdichter 7 befindet, der mit einem Ozonisator 8 durch eine Leitung 9 in Verbindung steht. Als Reinwasseraustritt dient ein Ablauf 10.

Bei Betrieb wird nun das zu behandelnde Abwasser durch die Zufuhr 3 und das Tauchrohr 4 in den Reaktor 1 eingeleitet. Ein Teil des Reaktorinhaltes wird mit der Pumpe 6 in den Beipass 5 eingezogen, durch den er wieder in den Reaktor 1 rückgeführt wird. In den Beipass 5 ist ein Wasserstrahl-Gasverdichter 7 eingegliedert, in den ozonhaltiges Gas, vorzugsweise ein Ozon-Sauerstoff-Gemisch, aus einem Ozonisator 8 eingespeist wird, der mit dem Wasserstrahl-Gasverdichter 7 durch eine Leitung 9 in Verbindung steht. An Stelle des Wasserstrahl-Gasverdichters 7 kann auch eine Gasturbine oder ein poröser Sinterkörper treten. Das mit ozonhaltigem Gas versetzte Abwasser tritt wieder in den Innenraum des Reaktors 1 ein, in dem es mit dem Festbett 2 in Kontakt gebracht wird.
An der Oberfläche des Festbettes 2 werden nun sowohl das Ozon, als auch die zu oxidierenden Bestandteile, wie beispielsweise gelöste Substanzen, im Speziellen Tenside und suspendierte Partikel, gemäß ihrem Adsorptionsgleichgewicht adsorbiert und sind an der Festbettoberläche einer vollständigen Oxidation durch das Ozon zugänglich. Im Falle des Fehlens einer solchen Festbettoberfläche würde bei mit Tensidmolekülen umhüllten Partikeln zunächst die Tensidhülle soweit oxidativ abgebaut, daß die Dispersion nicht mehr stabil ist. Die Partikel würden dann ausfallen und sich somit dem Oxidationsprozeß beispielsweise durch Sedimentation und Schichtbildung auf dem Reaktorboden entziehen. Wenn jedoch eine Adsorption der dispergierten Teilchen an einer festen Oberfläche vor oder während des ersten oxidativen Angriffes erfolgt, dann findet ein weiterer oxidativer Abbau der dispergierten Teilchen an der Adsorptionsoberfläche des Trägermaterials statt, da auch das Ozon an dieser Oberfläche feinverteilt adsorbiert wird. Die Adsorption ist überraschenderweise so groß, daß gleichzeitig eine erstaunlich wirksame Entschäumung stattfindet. Mit dem erfindungsgemäßen Verfahren wird ein erheblich besserer Abbaugrad bezüglich CSB, AOX (adsorbierbare organische Halogenverbindungen) und beispielsweise von Farbstoffen aus Textilabwässern erreicht. Mit dem erfindungsgemäßen Verfahren können auch Deponiesickerwässer behandelt werden. Selbstverständlich kann das Verfahren auch zur Aufarbeitung von dispergierten flüssigen Teilchen verwendet werden. Als Festbett für die Adsorption der im Abwasser befindlichen Bestandteile, die dem erfindungsgemäßen Verfahren unterzogen werden sollen, kommen alle gebräuchlichen Materialien, wie beispielsweise keramische Materialien, Metall, Glas oder Kunststoff und Mischungen derselben in Betracht, die in Form von Füllkörpern vorliegen können.

## Patentansprüche

1. Verfahren zur Behandlung von verschmutztem, vorzugsweise tensidhaltigem Abwasser, in welchem feste oder flüssige Teilchen dispergiert sind, umfassend folgende Maßnahmen:
- Zuführen des Abwassers in einen Reaktor (1),
- Versetzen des Abwassers mit ozonhaltigem Gas,
- In Kontakt bringen des mit ozonhaltigem Gas versetzten Abwassers mit der Oberfläche eines Festbettes (2),
- Abziehen des behandelten Abwassers aus dem Reaktor (1).

2. Verfahren nach Anspruch 1,
dadurch gekennzeichnet,
daß das Abwasser aus dem Reaktor (1) in einem Teilkreislauf entnommen, mit Ozon angereichert und dem Reaktor (1) wieder zugeführt wird.

3. Abwandlung des Verfahrens nach Anspruch 1 oder 2,
dadurch gekennzeichnet,
daß stark verunreinigtes Abwasser behandelt wird, das dispergierte, feste oder flüssige Teilchen enthält, die durch Turbulenzen in der Suspension gehalten werden.

4. Verfahren nach Anspruch 3,
dadurch gekennzeichnet,
daß das Abwasser keine Tenside enthält.

5. Vorrichtung zur Durchführung des Verfahrens nach Anspruch 1, mit einem Reaktor (1), einem Zulauf (3), einem Ablauf (10), einem Ozonisator (8) und Mitteln zum Eintrag des ozonhaltigen Gasgemisches in das Abwasser, dadurch gekennzeichnet, daß der Reaktor (1) ein Festbett (2) enthält.

6. Vorrichtung nach Anspruch 5,
dadurch gekennzeichnet,
daß an dem Reaktor (1) ein Beipass (5) mit einer Pumpe (6) angebracht ist, dem Mittel zum Eintrag des ozonhaltigen Gases zugeordnet sind.
